## Europäisches Patentamt

## European Patent Office

## Office européen des brevets

(19)

(11) Veröffentlichungsnummer : **0 164 603**
**B1**

(12)

# EUROPÄISCHE PATENTSCHRIFT

(45) Veröffentlichungstag der Patentschrift :
**11.01.89**

(51) Int. Cl.⁴ : **B 62 D   5/07**

(21) Anmeldenummer : **85105973.3**

(22) Anmeldetag : **15.05.85**

(54) **Hydraulikanlage.**

(30) Priorität : **15.06.84 DE 3422205**

(43) Veröffentlichungstag der Anmeldung :
**18.12.85 Patentblatt 85/51**

(45) Bekanntmachung des Hinweises auf die Patenterteilung : **11.01.89 Patentblatt 89/02**

(84) Benannte Vertragsstaaten :
**DE FR GB IT**

(56) Entgegenhaltungen :
**EP--A-- 0 044 065**
**DE--A-- 2 733 054**

(73) Patentinhaber : **ROBERT BOSCH GMBH**
**Postfach 50**
**D-7000 Stuttgart 1 (DE)**

(72) Erfinder : **Klotzbücher, Wolfgang, Dipl.-Ing.**
**Landstuhler Strasse 38**
**D-7000 Stuttgart 31 (DE)**
Erfinder : **Walter, Heinz, Ing. grad.**
**Blumenstrasse 41**
**D-7255 Rutesheim (DE)**

EP 0 164 603 B1

## Beschreibung

### Stand der Technik

Die Erfindung betrifft eine Hydraulikanlage mit einem Lenkkreis und wenigstens einem Arbeitskreis nach der Gattung des Hauptanspruchs. Bei einer derartigen bekannten Hydraulikanlage sind beide Druckwaagen direkt an die Förderleitungen der Pumpen angeschlossen. Das hat zur Folge, daß die Druckmittelverluste durch die Serienschaltung der Druckwaagen bezüglich den ihnen zugeordneten Pumpen größer als notwendig sind, und insbesondere auch dadurch, daß von den Druckwaagen keine direkte Verbindung zum Behälter besteht, sondern diese immer über einen Verbraucher führt (EP-A-44 065).

### Aufgabe der Erfindung

Es ist Aufgabe der Erfindung, eine Hydraulikanlage nach der Gattung des Hauptanspruchs zu schaffen, die besonders energiesparend betrieben werden kann und im übrigen in ihrem Einsatz auch sehr anpassungsfähig ist. Durch die in den Unteransprüchen aufgeführten Maßnahmen sind Weiterbildungen der im Hauptanspruch angegebenen Merkmale möglich.

### Zeichnung

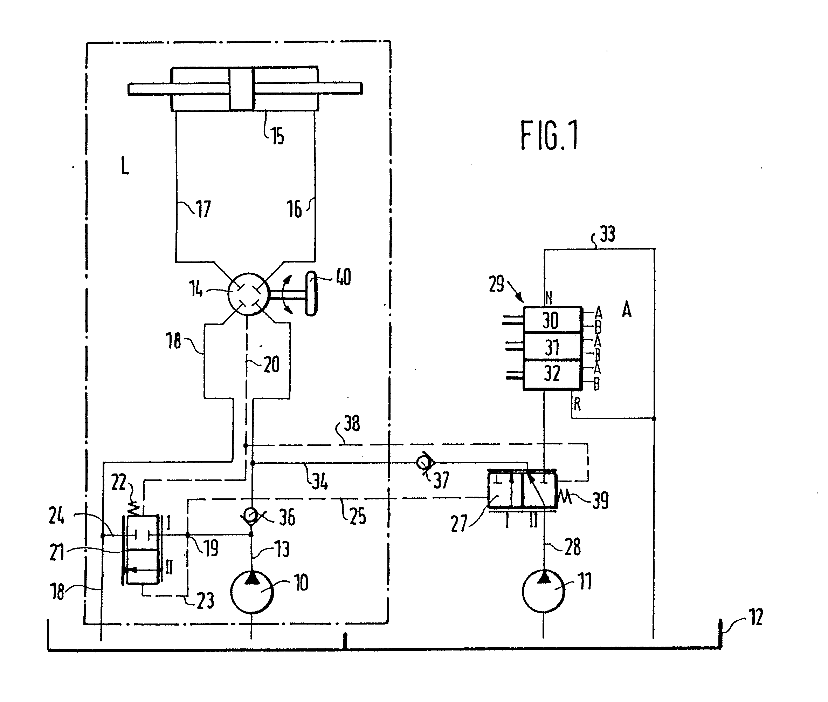

Ausführungsbeispiele der Erfindung sind in der Zeichnung dargestellt und in der nachfolgenden Beschreibung näher erläutert. Die Figuren 1 bis 5 zeigen Hydraulikanlagen jeweils in schematischer Darstellung.

### Beschreibung der Erfindungsbeispiele

In Figur 1 sind mit 10, 11 zwei hydrostatische Pumpen bezeichnet, die Druckmittel aus einem Behälter 12 ansaugen. Die Pumpe 10 verdrängt das angesaugte Druckmittel in eine Förderleitung 13, die zu einem Lenkventil 14 eines Lenkzylinders 15 führt. Von dem Lenkventil führen zwei Leitungen 16, 17 zu den beiden Druckräumen des Lenkzylinders. Vom Lenkventil führt außerdem eine Leitung 18 zurück zum Behälter. Ferner geht vom Lenkventil 14 eine Steuerleitung 20 aus, die an die eine Stirnseite einer Druckwaage 21 führt ; von dieser Seite her wirkt auch eine Regelfeder 22 auf die Druckwaage ein. Von der Förderleitung 13 zweigt eine Leitung 23 ab, die an die Längsseite der Druckwaage führt. Von der entgegengesetzten Seite geht eine Leitung 24 aus, die in die Leitung 18 mündet. Von der Leitung 23 zweigt in einem Zweigpunkt 19 eine Steuerleitung 25 ab, die einerseits zur entgegengesetzten Stirnseite der Druckwaage 21 führt, andererseits zur einen Stirnseite einer Druckwaage 27. Die Druckwaage 21 weist eine Sperrstellung I und eine Durchflußstellung II mit fließendem Übergang auf.

Die Pumpe 11 verdrängt das von ihr geförderte Druckmittel in eine Förderleitung 28, die über die Druckwaage 27 zu einem Ventilblock 29 führt. Dieser besteht beispielsweise aus drei verschiedenen Steuerventilen 30, 31, 32, wobei an jedes von diesen ein Verbraucher angeschlossen ist. Vom Steuerblock führt eine Rücklaufleitung 33 zum Behälter. Die Pumpe 11 samt Druckwaage 27 und Steuerblock 29 bilden einen Arbeitskreis A, während die Pumpe 10 mit dem Lenkventil 14 und dem Lenkzylinder 15 einen Lenkkreis L bilden.

Von der Förderleitung 13 zweigt eine Leitung 34 ab, die an die Längsseite der Druckwaage 27 führt. Diese vermag ebenfalls zwei Schaltstellungen I und II mit fließendem Übergang einzunehmen. In der Leitung 34 ist ein Rückschlagventil 37 angeordnet, das sich in Richtung von der Druckwaage 27 zur Förderleitung 13 hin zu öffnen vermag. In der Förderleitung 13 ist ebenfalls ein Rückschlagventil 36 angeordnet, das sich in Richtung von der Pumpe 10 zum Lenkventil 14 hin zu öffnen vermag. Das Rückschlagventil 36 liegt zwischen der Anschlußstelle der Leitung 23 zur Leitung 13 und der Anschlußstelle der Leitung 34 in die Leitung 13. Von der Steuerleitung 20 führt eine Steuerleitung 38 zu der der Mündungsstelle der Leitung 25 entgegengesetzten Stirnseite der Druckwaage 27. Von dieser Seite wirkt auch eine Regelfeder 39 auf die Druckwaage ein. Das Lenkventil 14 wird von einem Lenkrad 40 betätigt.

Die Pumpe 10 ist so ausgelegt, daß der maximal erforderliche Lenkvolumenstrom erst bei hohen Antriebsdrehzahlen erreicht wird. Die Druckwaage 21 ruft im Regelzustand einen Druckabfall (Durchflußwiderstand) von $\Delta P1$, die Druckwaage 27 einen Druckabfall $\Delta P2$ hervor. Es gilt : $\Delta P1 >$ als $\Delta P2$. Das Lenkventil 14 ist in sogenannter Load-Sensing-Technik ausgeführt, d. h. der sich am Lenkventil einstellende Verbraucherdruck des Lenkzylinders wird in die Steuerleitung 20 übertragen. Der Behälter 12 und die verschiedenen Ansaugleitungen sind so ausgelegt, daß der Arbeitskreis den Behälter nicht leersaugen kann.

Es ergeben sich folgende vier Betriebszustände :

1. Der erforderlichen Lenkvolumenstrom ist gleich Null. Der von der Pumpe 10 erzeugte Druck wirkt über die Leitungen 23 und 25 auf die Druckwaage 21, die nun entgegen der Kraft der Regelfeder 22 in Schaltstellung II verstellt wird. Damit fließt das gesamte, von der Pumpe 10 geförderte Druckmittel über die Leitung 24 und die Leitung 18 zum Behälter. Die Druckwaage 27 wird, da $\Delta P1 > \Delta P2$ ist, entgegen der Kraft der Regelfeder 39 in Schaltstellung I gebracht, so daß die Pumpe 11 ihr Druckmittel zum Ventilblock 29 fördert. Lenk- und Arbeitshydraulikkreis sind getrennt.

2. Der erforderliche Lenkvolumenstrom ist größer als Null und kleiner als der Volumenstrom der Pumpe 10. Nun fließt ein Teil des von der Pumpe 10 geförderten Volumenstroms zum Lenkventil 14. Da sich in der Steuerleitung 20 ein Druck aufbaut, wird nun die Druckwaage 21 von der Schaltstellung II etwas in Richtung Schaltstellung I verstellt, so daß nun auch noch ein von der Pumpe 10 geförderter Reststrom zum Behälter fließt. Zwischen dem Druckabgriffpunkt 19 an der Mündungsstelle der Leitungen 25 und 23 und dem Lenkventil fällt ein Druck in der Höhe von Δ P1 ab. Da — wie bereits oben festgestellt — Δ P1 größer ist als Δ P2, befindet sich die Druckwaage 27 nach wie vor in Schaltstellung I, so daß der von der Pumpe 11 geförderte Volumenstrom zum Ventilblock 29 fließt. Lenk- und Arbeitshydraulik sind nach wie vor getrennt.

3. Der erforderliche Lenkvolumenstrom ist gleich dem von der Pumpe 10 geförderte Volumenstrom. Der Druckabfall am Lenkventil 14 ist nun geringer geworden als Δ P1, aber größer als Δ P2. Dadurch wird die Druckwaage 21 durch die Regelfeder 22 in Sperrstellung I gebracht. Der von der Pumpe 10 geförderte Volumenstrom fließt vollständig zum Lenkventil 14 bzw. zum Arbeitszylinder 15. Die Druckwaage 27 des Arbeitskreises A befindet sich nach wie vor in Stellung I, so daß wiederum der ganze von der Pumpe 11 geförderte Volumenstrom zum Ventilblock 29 fließt.

4. Der erforderliche Lenkvolumenstrom ist größer als der von der Pumpe 10 geförderte Volumenstrom. Nun ist der Ventilquerschnitt am Lenkventil 14 so weit geöffnet, daß sich nur noch ein geringer Druckabfall ergibt, der gleich oder kleiner Δ P2 ist, d. h. ein Druckabfall, der die Druckwaage 27 betätigt. Die Druckwaage 21 ist durch die Regelfeder völlig geschlossen, so daß der gesamte Volumenstrom der Pumpe 10 zum Lenkventil 14 fließt. Der Druck in der Steuerleitung 38 genügt im Zusammenwirken mit der Regelfeder 39, die Druckwaage 27 in Regelstellung (Schaltungstellung zwischen I und II) zu bringen, so daß ein Teil des von der Pumpe 11 geförderten Druckmittels über die Leitung 34 und über das Rückschlagventil 37 ebenfalls zum Lenkventil 14 fließt. Der Reststrom gelangt zum Ventilblock 29. Das Rückschlagventil 36 sorgt dafür, daß bei Ausfall der Pumpe 10 und/oder der Druckwaage 21 die Lenkfähigkeit voll erhalten bleiben, da das Rückschlagventil 36 dann geschlossen ist. Nun übernimmt die Pumpe 11 die Versorgung der Lenkung.

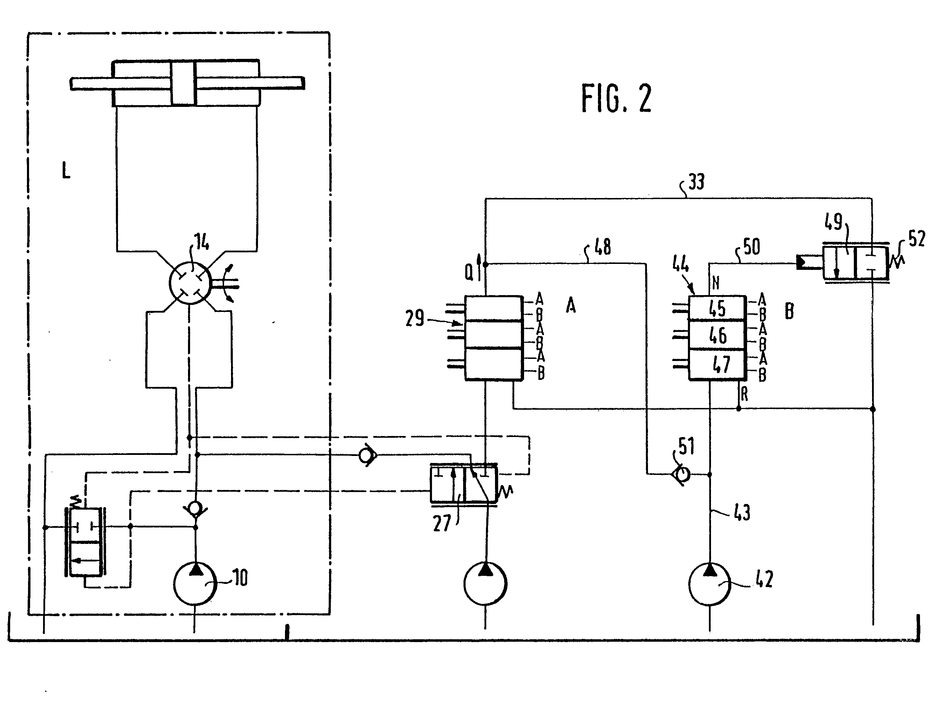

Das Ausführungsbeispiel nach Figur 2 unterscheidet sich von demjenigen nach Figur 1 dadurch, daß hier noch eine dritte Pumpe 42 vorgesehen ist, die ebenfalls Druckmittel aus dem Behälter 12 ansaugt und in eine Förderleitung 43 verdrängt. Diese führt zu einem zweiten Ventilblock 44 mit den Schaltventilen 45, 46, 47 eines Arbeitskreises B. Von der Förderleitung 43 zweigt eine Leitung 48 ab, welche in die vom Ventilblock 29 kommenden Leitung 33 mündet. In die Leitung 33 ist ein Abschaltventil 49 eingeschaltet, das über eine vom Ventilblock 44 kommende Steuerleitung 50 entgegen der Kraft einer Feder 52 durch Druckmitteldruck verstellbar ist. In der Leitung 48 ist ein sich von der Leitung 33 zur Leitung 43 öffnendes Rückschlagventil 51 angeordnet. Im übrigen gilt für dieses Ausführungsbeispiel ebenfalls wieder das oben Gesagte, insbesondere was die Einstellung der Druckwaagen 21 und 27 betrifft.

Der Volumenstrom der Pumpe 11 kann nach Bedarf den Volumenströmen der Pumpen 10 und 42 zugeführt werden. Die Druckwaage 27 im ersten Arbeitskreis A ist das erste, den Volumenstrom verzweigende Element stromabwärts der Pumpe 11. Der Volumenstrom zum Lenkventil 14 hat damit immer Priorität. Der hinter dem ersten Arbeitskreis A anfallende Volumenstrom Q kann bedarfsmäßig dem Arbeitskreis B zugeführt oder auf neutralen Umlauf geschaltet werden. Letzteres geschieht mit Hilfe des Abschaltventil 49, das durch den in der Leitung 50 herrschenden Druck aus der Sperrstellung II in die Durchflußstellung I geschaltet wird, in der der Volumenstrom Q zum Behälter fließt.

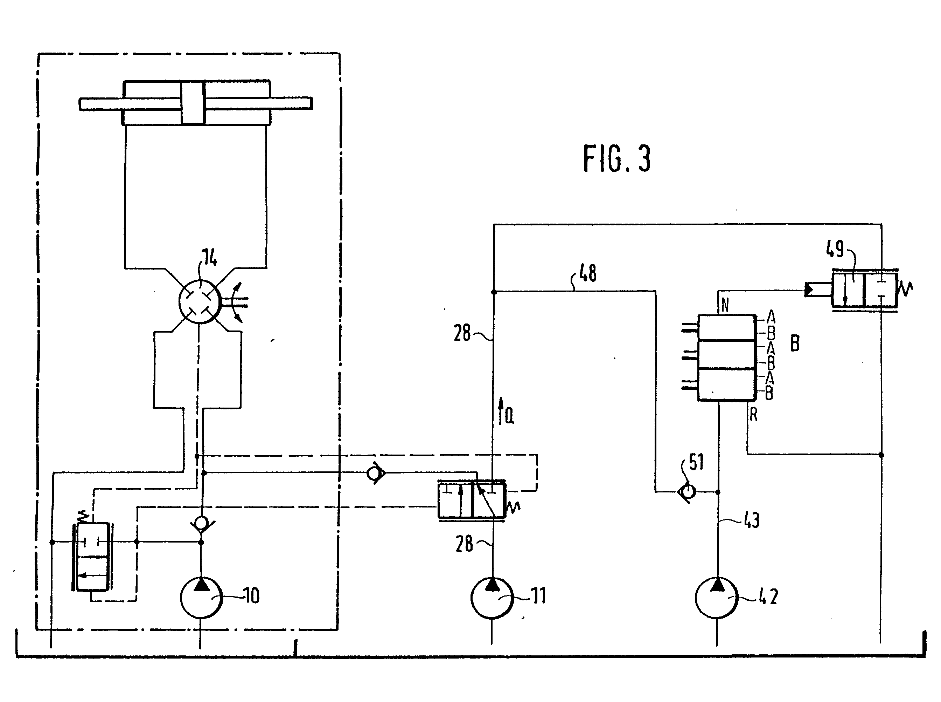

Eine Abwandlung der beiden zuvor beschriebenen Ausführungsbeispiele zeigt das Ausführungsbeispiel nach Figur 3. Hier sind wiederum die im Ausführungsbeispiel nach Figur 2 dargestellten drei Pumpen 10, 11, 42 vorhanden, jedoch fehlt der an die Förderleitung 28 angeschlossene Arbeitskreis A. Dafür führt von der Förderleitung 28 die Leitung 48 weiter zur Förderleitung 43 der Pumpe 42. Bei dieser Variante wird der Volumenstrom der Pumpe 11 nach Bedarf dem Lenkventil 14 und/oder dem Arbeitskreis B zugeführt.

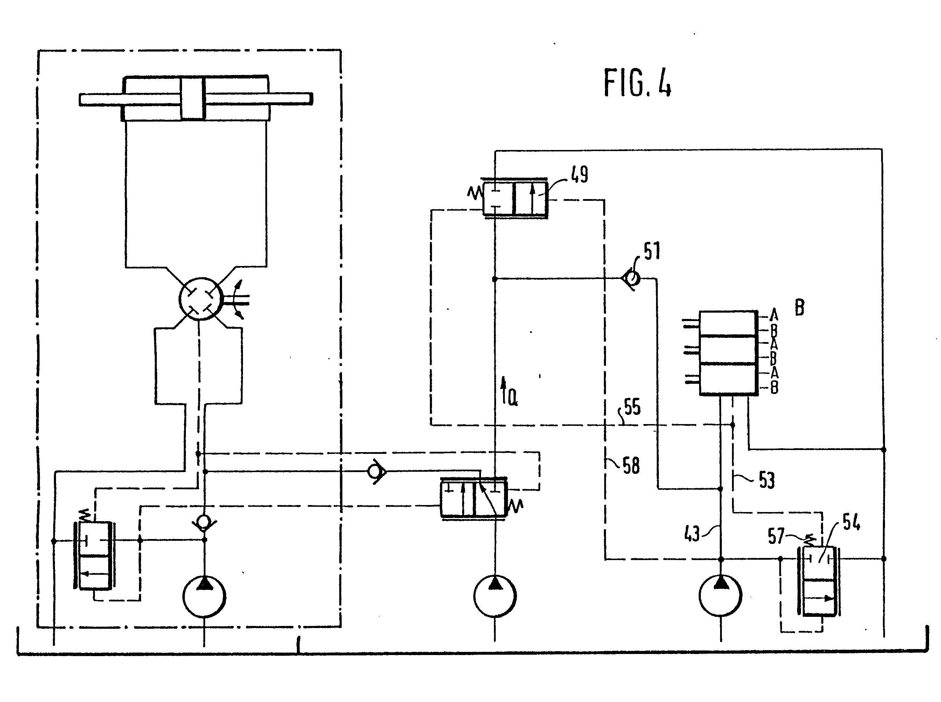

Das Ausführungsbeispiel nach Figur 4 unterscheidet sich von demjenigen nach Figur 3 dadurch, daß an den Ventilblock 44 eine Steuerleitung 53 angeschlossen ist, die zu einem Abschaltventil 54 führt. In der Steuerleitung 53 herrscht der Druck der an die Ventile 45 bis 47 angeschlossenen Verbraucher. Damit handelt es sich also um sogenannte load-sensitive Wegeventile. Von der Leitung 53 zweigt eine Leitung 55 ab, welches ebenfalls zur einen Seite des Abschaltventils 49 führt. Auf die eine Stirnseiten der Abschaltventile 49, 54 wirkt je eine Feder 56, 57 ein. An die Förderleitung 43 der Pumpe 42 ist eine Steuerleitung 58 angeschlossen, die zu den anderen Stirnseiten der Abschaltventile 49, 54 Verbindung hat. Der von der Pumpe 11 geförderte Volumenstrom kann wiederum — wie im Ausführungsbeispiel nach Figur 1 — dem Lenkungskreis L bzw. dem Arbeitskreis B zugeführt werden. Insofern ändert sich hierdurch nichts. Über die Förderleitung 28 und die Leitung 48 kann nach Bedarf wieder der Arbeitskreis B mit dem Restvolumenstrom Q versorgt werden bzw. es kann abhängig vom benötigten Volumenstrom im Arbeitskreis B der Volumenstrom Q über das Abschaltventil 49 zum Behälter abgeführt werden. Das Abschaltventil 54 dient zum Entlasten der Pumpe 42. Ist deren Volumenstrom nicht erforderlich, so wird er über das Abschaltventil 54 direkt zum Behälter abgeführt.

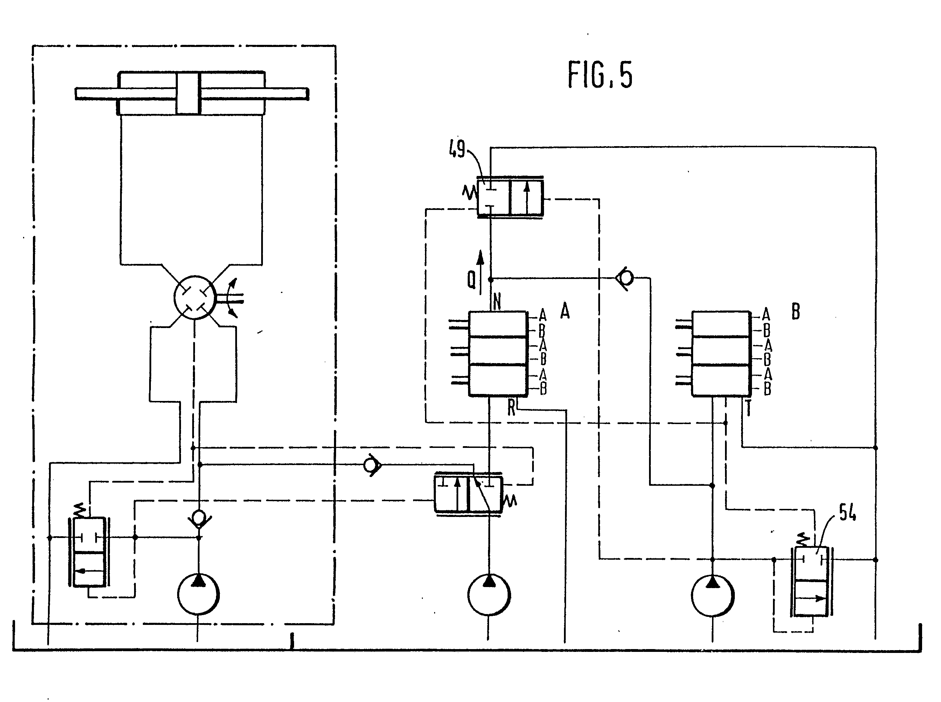

Das Ausführungsbeispiel nach Figur 5 stellt eine Kombination desjenigen nach Figur 2 und Figur 4 dar. Auf eine detaillierte Beschreibung ist deshalb verzichtet, da die Funktionsweise sich von selbst ergibt.

Die Vorteile der oben beschriebenen Anlagen ergeben sich hauptsächlich dadurch, daß die Pumpe 10 für den Lenkkreis kleingehalten werden kann. Eine bedarfsabhängige Zusatzversorgung mit Priorität ist aus einem Pumpenkreis 11 einer Arbeitshydraulik möglich. Die Verlustleistung im Lenkungskreis ist gering, da die installierte Pumpenleistung gering ist. Bei mittleren bis hohen Antriebsdrehzahlen reicht der Förderstrom der Pumpe 10 für alle Lenkbewegungen aus. Der Lenkkreis kann weder druckseitig noch behälterseitig Druckmittel in den Arbeitskreis verlieren. Die Verfügbarkeit des von der Pumpe (11) geförderten Volumenstroms ist sehr hoch. Je nach Volumenstrombedarf der Verbraucher sind möglich, ein Neutralumlauf, ein geregelter Volumenstrom zur Lenkung, ein Volumenstrom zum Arbeitskreis, ein geregelter Volumenstrom zur Lenkung und ein Reststrom zum Arbeitskreis.

**Patentansprüche**

1. Hydraulikanlage mit einem Lenkkreis (L) und wenigstens einem Arbeitskreis (A) und mit wenigstens zwei diese Kreise versorgenden Pumpen, denen jeweils eine Druckwaage (21 bzw. 27) zugeordnet ist, von denen sich die dem Arbeitskreis (A) zugeordnete Druckwaage (27) in der Förderleitung (28) der diesen Arbeitskreis versorgenden Pumpe (11) befindet, wobei von dieser Druckwaage eine Leitungsverbindung (34) zum Lenkkreis (L) führt, in der ein sich vom Arbeitskreis zum Lenkkreis hin öffnendes Rückschlagventil (37) angeordnet ist, und wobei beide Druckwaagen einerseits vom Förderdruck der dem Lenkkreis zugeordneten Pumpe (10) beaufschlagt sind, andererseits vom an dem dem Lenkkreis zugeordneten Ventil (14) herrschenden Steuerdruck und von dieser Seite her jeweils auch durch eine Reglerfeder (22, 39) belastet sind, von denen die Reglerfeder (22) der dem Lenkkreis zugeordneten Druckwaage (21) eine höhere Vorspannkraft aufweist als die andere Regelfeder (39), dadurch gekennzeichnet, daß die dem Lenkkreis (L) zugeordnete Druckwaage (21) parallel an die Förderleitung (13) dieser Pumpe (10) angeschlossen ist und daß in dieser Förderleitung (13) ein sich in Richtung zum Lenkventil (14) hin öffnendes Rückschlagventil (36) angeordnet ist, das einerseits zwischen der Anschlußstelle (19) einer Zweigleitung von der Förderleitung (13) der ersten Pumpe zur Druckwaage (21) liegt und andererseits vor der Mündungsstelle der Leitungsverbindung (34) von dieser Förderleitung zur Förderleitung der zweiten Pumpe (11).

2. Anlage nach Anspruch 1, dadurch gekennzeichnet, daß in dieser eine dritte Pumpe (42) zum Versorgen eines zweiten Arbeitskreises (B) angeordnet ist und daß vom Ausgang des ersten Arbeitskreises (A) eine Leitung (48) zur Förderleitung (43) der dritten Pumpe (42) führt, die ein Rückschlagventil (51) aufnimmt, das sich in Richtung vom ersten Arbeitskreis zum zweiten Arbeitskreis zu öffnen vermag. (Figur 2).

3. Anlage nach Anspruch 1 und/oder 2, dadurch gekennzeichnet, daß der zweite Arbeitskreis parallel an die zweite Pumpe (11) über eine ein Rückschlagventil (51) enthaltende Leitung (48) angeschlossen ist und daß eine dritte Pumpe (42) vorgesehen ist, die unmittelbar diesen Arbeitskreis versorgt (Figur 3).

4. Anlage nach einem der Ansprüche 1 bis 3, dadurch gekennzeichnet, daß den Arbeitskreisen Abschaltventile (49, 54) zugeordnet sind, die durch Druckmittel beaufschlag- und steuerbar sind, und daß deren Steuerung über Steuerleitung (53, 55) erfolgt, die an load-sensitive Wegeventile der Arbeitskreise angeschlossen sind.

5. Anlage nach einem der Ansprüche 1 bis 4, dadurch gekennzeichnet, daß die den Arbeitskreisen (A und B) zugeordneten Wegeventile open center-Ventile sind.

**Claims**

1. Hydraulic installation with a steering circuit (L) and at least one operating circuit (A) and with at least two pumps supplying these circuits, to each of which pumps a pressure balance (21 and 27, respectively) is assigned, of which the pressure balance (27) is assigned to the operating circuit (A) is in the delivery line (28) of the pump (11) supplying this operating circuit, there leading from this pressure balance a line connection (34) to the steering circuit (L), in which connection a non-return valve (37), opening from the operating circuit towards the steering circuit, is arranged, and both pressure balances being impinged on the one hand by the delivery pressure of the pump (10) assigned to the steering circuit, on the other hand being loaded by the control pressure prevailing at the valve (14) assigned to the steering circuit and also, from this side in each case, by a control spring (22, 39), of which the control spring (22) of the pressure balance (21) assigned to the steering circuit has a higher biasing force than the other control spring (39), characterized in that the pressure balance (21) assigned to the steering circuit (L) is connected in parallel to the delivery line (13) of this pump (10) and in that in this delivery line (13) there is arranged a non-return valve (36), which opens in the direction of the steering valve (14) and lies on the one hand between the connection point (19) of a branch line from the delivery line (13) of the first pump to the pressure balance (21) and on the other hand in front of the junction of the line connection (34) from this delivery line to the delivery line of the second pump (11).

2. Installation according to Claim 1, characterized in that a third pump (42) for supplying a second operating circuit (B) is arranged therein and in that from the outlet of the first operating circuit (A) there leads a line (48) to the delivery line (43) of the third pump (42), which recives a non-return valve (51), which is able to open in the direction from the first operating circuit to the second operating circuit. (Figure 2).

3. Installation according to Claim 1 and/or 2, characterized in that the second operating circuit is connected in parallel to the second pump (11) via a line (48) containing a non-return valve (51) and in that a third pump (42) is provided, which supplies this operating circuit directly (Figure 3).

4. Installation according to one of claims 1 to 3, characterized in that the operating circuits are assigned shut-off valves (49, 54), which can be actuated and controlled by pressure media, and in that their control takes place via a control line (sic) (53, 55), which are connected to load-sensitive directional control valves of the operating circuits.

5. Installation according to one of Claims 1 to 4, characterized in that the directional control valves assigned to the operating circuits (A and B) are open center valves.

## Revendications

1. Installation hydraulique avec un circuit de direction (L) et au moins un circuit de travail (A) et au moins deux pompes alimentant ces circuits, une balance de pression (21, respectivement 27) affectée à chacune d'elle se trouvant dans la conduite de refoulement (28) de la pompe alimentant ce circuit, une liaison par conduite (34) menant à cette occasion de cette balance de pression, vers le circuit de direction (L), dans lequel est disposé une soupape anti-retour (37) s'ouvrant dans la direction allant du circuit de travail au circuit de direction, et les deux balances de pression étant à cette occasion sollicitées, d'une part, par la pression de refoulement de la pompe (10) affectée au circuit de direction, d'autre part, par la pression de commande régnant sur la soupape (14) affectée au circuit de direction et étant également chacune chargée de ce côté par un ressort de régulation (22, 39) parmi lesquels le ressort de régulation (22) de la balance (21) affectée au circuit de direction présente une force de précontrainte plus importante que l'autre ressort de régulation (39), caractérisé en ce que la balance de pression (21) affectée au circuit de direction (L) est raccordée en parallèle à la conduite de refoulement (13) de cette pompe (10) et en ce qu'une soupape anti-retour (36) est disposée dans cette conduite de refoulement (13), en s'ouvrant dans la direction allant vers la soupape de direction (14), soupape anti-retour qui est située, d'une part, entre le point de raccordement (19) d'une conduite de dérivation de la conduite de refoulement (13) de la première pompe vers la balance de pression (21) et, d'autre part, avant le point d'embouchure de la liaison par conduite de refoulement, allant vers la conduite de refoulement de la deuxième pompe (11).

2. Installation selon la revendication 1, caractérisée en ce qu'une troisième pompe (42) est disposée dans celle-ci pour alimenter un deuxième circuit de travail (B) et en ce qu'une conduite de travail (48) mène de la sortie du premier circuit de travail (A) à la conduite de refoulement (43) de la troisième pompe (42), conduite qui reçoit une soupape anti-retour (51), qui permet une ouverture dans la direction allant du premier circuit de travail vers le deuxième circuit de travail (figure 2).

3. Installation selon la revendication 1 et/ou 2, caractérisée en ce que le deuxième circuit de travail est raccordé parallèlement à la deuxième (1), par une conduite (48) recevant une soupape anti-retour (51), et en ce qu'est prévue une troisième pompe (42) qui alimente directement ce circuit de travail (figure 3).

4. Installation selon l'une des revendications 1 à 3, caractérisée en ce que des soupapes de déconnexion (49, 54) sont affectées aux circuits de travail, soupapes qui sont susceptibles d'être sollicitées et commandées au moyen du fluide à pression, et en ce que leur commande s'effectue par des conduites de commande (53, 55), qui sont raccordées à des soupapes à voies multiples du circuit de travail, soupapes sensibles à la charge.

5. Installation selon l'une des revendications 1 à 3, caractérisée en ce que les soupapes à voies multiples affectées aux circuits de travail (A et B) sont des soupapes à centre ouvert.

FIG.1

FIG. 2

FIG. 3

EP 0 164 603 B1

FIG. 4

FIG.5